# NEUE EUROPÄISCHE PATENTSCHRIFT

(11) **EP 2 737 467 B2**
(45) Veröffentlichungstag und Bekanntmachung des Hinweises auf die Entscheidung über den Einspruch: **01.08.2018**
(45) Hinweis auf die Patenterteilung: 01.04.2015
(21) Anmeldenummer: 12725416.7
(22) Anmeldetag: 01.06.2012
(51) Int. Cl.: G08G 1/16, B60K 28/06, B62D 15/02, B60W 30/06

(54) **VERFAHREN ZUR UNTERSTÜTZUNG EINES FAHRERS EINES KRAFTFAHRZEUGS**
PROCEDURE TO ASSIST THE DRIVER OF A VEHICLE
PROCÉDURE POUR AIDER LE CONDUCTEUR D'UN VÉHICULE

(30) Priorität: 25.07.2011 DE 102011079703
(43) Veröffentlichungstag der Anmeldung: 04.06.2014
(73) Patentinhaber: Robert Bosch GmbH, 70442 Stuttgart (DE)
(72) Erfinder: RAISCH, Florian, 71116 Gaertringen (DE)
(86) Internationale Anmeldenummer: PCT/EP2012/060409
(87) Internationale Veröffentlichungsnummer: WO 2013/013871

(56) Entgegenhaltungen:
- EP-A1- 2 295 281
- EP-B1- 1 249 379
- EP-B1- 1 642 770
- WO-A1-2010/006981
- DE-A1-102008 017 833
- DE-A1-102008 019 346
- DE-A1-102008 033 925
- DE-A1-102008 040 149
- DE-A1-102009 041 587
- JP-A- 2008 033 438
- US-A1- 2009 082 066
- US-A1- 2010 079 508
- US-A1- 2011 169 625

## Beschreibung

### Stand der Technik

Die Erfindung geht aus von einem Verfahren zur Unterstützung eines Fahrers eines Kraftfahrzeugs bei einem Fahrmanöver gemäß dem Oberbegriff des Anspruchs 1. Weiterhin betrifft die Erfindung auch eine Vorrichtung zur Durchführung des Verfahrens.

Um sicherzustellen, dass der Fahrer eines Kraftfahrzeugs bei einem automatisch durchgeführten Fahrmanöver, insbesondere einem automatisch durchgeführten Einparkmanöver jederzeit eingreifen kann, um das Manöver abzubrechen, insbesondere dann wenn zum Beispiel eine Kollision mit einem während des Manövers nicht erfassten Objekt oder mit einem plötzlich in den Fahrschlauch des Fahrzeugs eintretenden Objekt droht, ist es nach internationalem Recht vorgeschrieben, dass der Fahrer des Kraftfahrzeugs ein solches automatisches Fahrmanöver überwacht.

Automatisch durchgeführte Fahrmanöver können zum einen durchgeführt werden, solange der Fahrer noch im Fahrzeug sitzt oder alternativ nachdem der Fahrer das Fahrzeug verlassen hat. Die Durchführung eines automatischen Fahrmanövers nachdem der Fahrer das Fahrzeug verlassen hat, ist insbesondere dann sinnvoll, wenn das Fahrzeug in eine Parklücke einparken soll, deren Breite nicht ausreichend ist, dass nach dem Einparken die Fahrertür noch geöffnet werden kann, um dem Fahrer das Aussteigen aus dem Fahrzeug zu ermöglichen.

Bei automatischen Fahrmanövern, bei denen der Fahrer noch im Fahrzeug sitzt, wird die Überwachung des Fahrmanövers durch den Fahrer zum Beispiel dadurch sichergestellt, dass dieser ein Bedienelement betätigen muss, zum Beispiel das Fahrpedal des Fahrzeugs. Alternativ ist es hier auch möglich, zum Beispiel mithilfe einer Sitzerkennung sicherzustellen, dass sich der Fahrer noch im Fahrzeug befindet. Dies ist jedoch bei automatischen Fahrmanövern, die durchgeführt werden während der Fahrer außerhalb des Fahrzeugs ist, nicht möglich. Damit der Fahrer das Fahrmanöver überwachen kann, muss dieser entweder das Fahrmanöver direkt beobachten oder alternativ über eine Darstellung in einer Ausgabeeinheit. Die Darstellung des Fahrmanövers in einer Ausgabeeinheit ist insbesondere dann notwendig, wenn der Fahrer das Fahrmanöver direkt nicht beobachten kann, zum Beispiel wenn das Fahrzeug in eine Garage einfährt. Auch kann der Fahrer üblicherweise von außerhalb des Fahrzeugs nicht den gesamten Bereich rund um das Fahrzeug wahrnehmen, so dass auch in diesem Fall die Ausgabe auf einer Ausgabeeinheit sinnvoll ist.

Um das Fahrmanöver auf einer Ausgabeeinheit darstellen zu können, wird die Umgebung des Fahrzeugs von geeigneten Sensoren erfasst. Die von den Sensoren erfasste Umgebung und das Fahrzeug selber können dann dargestellt werden und der Fahrer kann die Bewegung des Fahrzeugs auf der Ausgabeeinheit nachvollziehen.

Ein solches Fahrassistenzsystem, das den Fahrer beim Einfahren in eine enge Garage unterstützt, ist zum Beispiel in WO 2010/006981 A1 beschrieben. Hierzu werden mit Hilfe einer Umfeldsensorik die Raumverhältnisse einer Garage automatisch erfasst. Mithilfe einer Fernsteuerung wird der Einparkvorgang in die Garage gesteuert. Der Einparkvorgang selbst wird über eine Schnittstelle visuell auf ein mobiles Endgerät übertragen und ist dort auf einem Display beobachtbar. Als mobiles Endgerät wird zum Beispiel ein Mobiltelefon, ein PDA oder ein Smartphone genannt.

Nachteil des hier beschriebenen Verfahrens ist jedoch, dass nicht sichergestellt werden kann, dass der Fahrer das Fahrmanöver tatsächlich überwacht. Das Fahrmanöver wird zwar auf dem Display dargestellt, es wird jedoch nicht sichergestellt, dass der Fahrer das Fahrmanöver auch wirklich beobachtet und sich nicht zum Beispiel vom Fahrzeug entfernt, während dieses automatisch einparkt.

Dokumente EP 2 295 281 A1 und DE 102 008 040 149 A1 beschreiben ähnliche Verfahren zur automatischen Führung eines Fahrzeugs.

### Offenbarung der Erfindung

### Vorteile der Erfindung

Das erfindungsgemäße Verfahren nach Anspruch 1 zur Unterstützung eines Fahrers eines Kraftfahrzeugs bei einem Fahrmanöver, wobei das Fahrmanöver zumindest semi-automatisch durchgeführt wird, umfasst folgende Schritte:
(a) Erfassung der Umgebung des Kraftfahrzeugs während der Durchführung des Fahrmanövers mit Sensoren am Kraftfahrzeug,
(b) Darstellung des Kraftfahrzeugs und der aktuellen Umgebung des Kraftfahrzeugs zu jedem Zeitpunkt des Fahrmanövers auf einer Ausgabeeinheit,
wobei während der Durchführung des Fahrmanövers mindestens ein Sensor eingesetzt wird, mit dem erfasst wird, ob der Fahrer des Kraftfahrzeugs das Fahrmanöver überwacht und eine Warnung ausgegeben wird und/oder das Fahrmanöver unterbrochen wird, wenn der Fahrer das Fahrmanöver nicht weiter überwacht.

Mit dem erfindungsgemäßen Einsatz des mindestens einen Sensors, mit dem erfasst wird, ob der Fahrer das Fahrmanöver überwacht, wird sichergestellt, dass den gesetzlichen Anforderungen an ein automatisches Fahrmanöver Rechnung getragen wird und der Fahrer das Fahrzeug während des Einparkmanövers nicht seinem Schicksal überlässt. Hierdurch ist weiterhin sichergestellt, dass der Fahrer jederzeit in das Geschehen eingreifen kann und das Fahrmanöver zum Beispiel unterbricht, wenn Gefahr, beispielsweise eine Kollision mit einem plötzlich in den Fahrschlauch eintretenden Objekt droht.

Das erfindungsgemäße Verfahren eignet sich insbesondere für die Durchführung des automatischen Fahrmanövers, nachdem der Fahrer das Fahrzeug verlassen hat, zum Beispiel zum Einparken in eine enge Parklücke, in der der Platz nicht mehr ausreichend ist, um eine Tür des Fahrzeugs zu öffnen, nachdem das Fahrzeug eingeparkt hat. In diesem Fall ist es erfindungsgemäß vorgesehen, wenn die Ausgabeeinheit zur Darstellung des Kraftfahrzeugs und der aktuellen Umgebung des Kraftfahrzeugs zu jedem Zeitpunkt des Fahrmanövers ein Bildschirm eines mobilen Endgerätes ist. Der Fahrer kann das mobile Endgerät mit sich führen und auf dem mobilen Endgerät das Fahrmanöver beobachten. Das mobile Endgerät eignet sich auch, das Fahrmanöver nachzuverfolgen, wenn der Fahrer noch im Fahrzeug sitzt, während das Fahrmanöver durchgeführt wird. Alternativ ist es für diesen Fall jedoch auch möglich, dass das Fahrmanöver auf einem Bildschirm innerhalb des Fahrzeugs, beispielsweise einem Bildschirm eines Navigationssystems dargestellt wird. Im Unterschied zum direkten Beobachten des Fahrmanövers entweder von innerhalb des Fahrzeugs oder von außerhalb des Fahrzeugs hat die Darstellung auf einem Bildschirm den Vorteil, dass die gesamte Umgebung des Kraftfahrzeugs und das Kraftfahrzeug selber dargestellt werden können und so ein besserer Überblick über das Fahrmanöver erhalten wird. Bei einer direkten Beobachtung ist der vom Fahrer einsehbare Bereich durch das Sichtfeld des Fahrers beschränkt, wohingegen zum Beispiel über eine Darstellung auf einem Bildschirm einer Ausgabeeinheit das gesamte Verfahren beispielsweise zweidimensional in Draufsicht dargestellt werden kann, wobei in diesem Fall alle das Fahrzeug umgebenden Objekte dargestellt werden können. Durch unterschiedliche Gestaltung der Objekte, beispielsweise durch farbliche Hervorhebungen oder gestrichelte Linien ist es auch möglich, beispielsweise unterschiedliche Höhen der erfassten Objekte zu zeigen, um beispielsweise darzustellen, dass es sich bei einem Objekt um einen Bordstein handelt, der bei dem Fahrmanöver überfahren werden kann oder ob das Objekt eine Höhe aufweist, die ein Überfahren nicht mehr möglich macht. Bei einer farblichen Darstellung lässt sich ein Objekt, das überfahren werden kann, beispielsweise ein Bordstein, grün darstellen, wohingegen Objekte, die nicht überfahren werden können, beispielsweise Pfosten, Steine oder andere Fahrzeuge, rot dargestellt werden.

Das mobile Endgerät, das genutzt wird, um das Kraftfahrzeug und die aktuelle Umgebung des Kraftfahrzeugs zu jedem Zeitpunkt darzustellen, kann zum Beispiel ein Smartphone, ein Mobiltelefon oder ein PDA (Personal Digital Assistent) sein. Vorteil der Verwendung eines Smartphones, eines Mobiltelefons oder eines PDA ist, dass es sich hierbei um Geräte handelt, die der Fahrer eines Kraftfahrzeugs üblicherweise mit sich führt. Demgegenüber wäre es bei einer separaten mobilen Ausgabeeinheit, auf der lediglich das Fahrmanöver dargestellt wird, notwendig, dass der Fahrer des Kraftfahrzeugs ein weiteres Gerät mit sich führt. Zudem weisen derzeit im Handel erhältliche Smartphones, Mobiltelefone und PDAs einen ausreichend großen Bildschirm mit einer hinreichend guten Auflösung auf, um das Fahrmanöver gut darstellen zu können.

Zur Erfassung, ob der Fahrer des Kraftfahrzeugs das Fahrmanöver überwacht, wird erfindungsgemäß ein optischer Sensor eingesetzt. Der eingesetzte optische Sensor kann zum Beispiel eine Frontkamera des mobilen Endgerätes sein. Mit der Frontkamera wird der Fahrer während des automatischen Fahrmanövers aufgenommen und mithilfe einer Bildverarbeitung kann ausgewertet werden, ob der Fahrer den Bildschirm des mobilen Endgerätes betrachtet. Solange der Fahrer den Bildschirm des mobilen Endgerätes betrachtet, ist davon auszugehen, dass dieser das Fahrmanöver auf dem Bildschirm verfolgt. Sobald der Fahrer nicht mehr auf den Bildschirm blickt muss davon ausgegangen werden, dass das Fahrmanöver nicht mehr seitens des Fahrers überwacht wird. In diesem Fall wird vorteilhafterweise zunächst eine Warnung ausgegeben, um die Aufmerksamkeit des Fahrers herzustellen. Wenn der Fahrer trotz Warnung nicht reagiert und seinen Blick nicht wieder auf den Bildschirm richtet, ist es zum Beispiel möglich, das Fahrmanöver abzubrechen. Hierdurch wird sichergestellt, dass kein unbeobachtetes automatisches Fahrmanöver durchgeführt wird. Insbesondere wird auf diese Weise sichergestellt, dass keine Personen oder Gegenstände durch das Fahrmanöver zu Schaden kommen, wenn beispielsweise nicht schnell genug auf einen im Fahrschlauch erscheinenden Fußgänger oder ein im Fahrschlauch erscheinendes Fahrzeug reagiert wird.

Die Warnung, die an den Fahrer ausgegeben wird, wenn dieser das Fahrmanöver nicht weiter überwacht, ist vorzugsweise akustisch. Hierzu wird zum Beispiel vom mobilen Endgerät ein Warnsignal gesendet, auf das der Fahrer reagieren muss. Weiterhin ist es vorteilhaft, wenn das Warnsignal durch den Fahrer nicht manuell abgeschaltet werden kann sondern nur dadurch zu beenden ist, dass der Fahrer seine Aufmerksamkeit wieder dem Fahrmanöver widmet und das Fahrmanöver auf dem Bildschirm verfolgt. Um Unfälle zu vermeiden ist es weiterhin bevorzugt, wenn das gleichzeitig mit dem Senden des Warnsignals Fahrmanöver unterbrochen wird. Wenn der Fahrer seine Aufmerksamkeit nicht wieder dem Fahrmanöver widmet, wird das Fahrmanöver bevorzugt endgültig abgebrochen.

Um die Umgebung des Kraftfahrzeugs während der Durchführung des Fahrmanövers zu erfassen, werden bevorzugt Abstandssensoren eingesetzt. Hierbei eignen sich zum Beispiel Ultraschallsensoren, Infrarotsensoren, Lidar-Sensoren, Radar-Sensoren oder optische Sensoren. Durch Senden eines Signals und Empfang des Echos des Signales, das von einem Objekt reflektiert wird, wird ein Objekt in der Umgebung des Fahrzeugs detektiert. Zusätzlich kann zum Beispiel durch Bestimmung der Lageänderung des Objekts in zwei aufeinanderfolgenden Messungen auch die Geschwindigkeit und die Bewegungsrichtung eines sich bewegenden Objektes bestimmt werden. Die Bewegungsrichtung und die Geschwindigkeit des Objektes können dann auch Eingang finden in die Bestimmung von geeigneten Trajektorien zur Durchführung des Verfahrens, wobei die Trajektorien so gewählt werden, dass das Fahrmanöver durchgeführt werden kann, ohne Objekte in der Umgebung des Fahrzeugs zu schädigen. Sollte während der Durchführung des Fahrmanövers ein Objekt in den Erfassungsbereich der Sensoren eintreten, ist es vorteilhaft, wenn das Fahrmanöver automatisch unterbrochen wird, sofern eine Kollision mit dem Objekt droht. Wenn die Auswertung ergibt, dass keine Gefährdung mit dem Objekt droht, kann das Fahrmanöver fortgeführt werden. Sollte seitens des Fahrassistenzsystems nicht erfasst werden, dass das sich dem Fahrzeug näherende Objekt in den Fahrschlauch gelangt und es zu einer Kollision mit dem Objekt kommen kann, wenn das Fahrmanöver fortgesetzt wird, ist es möglich, dass der Fahrer des Fahrzeugs das Fahrmanöver abbricht. Dies kann zum Beispiel mithilfe einer Notstopptaste auf dem mobilen Endgerät geschehen. Weiterhin sollte dem Fahrer jedoch auch die Möglichkeit eingeräumt werden, zum Beispiel mit einer entsprechenden Taste auf dem mobilen Endgerät das Fahrmanöver fortzusetzen, sobald sich das Objekt aus dem Fahrschlauch des Fahrzeugs entfernt hat und eine gefahrlose Fortführung des Fahrmanövers möglich ist.

Um das Fahrmanöver gefahrlos durchführen zu können, ist es vorteilhaft, wenn die gesamte Umgebung rund um das Fahrzeug erfasst werden kann. Hierzu sind die Sensoren zur Erfassung der Umgebung des Kraftfahrzeugs vorteilhafterweise so angeordnet, dass die Umgebung rund um das Kraftfahrzeug erfasst wird. Hierzu ist es zum Beispiel möglich, Sensoren im Frontbereich und im Heckbereich des Fahrzeugs vorzusehen und zusätzlich Sensoren, die den Bereich seitlich neben dem Kraftfahrzeug erfassen.

Eine Vorrichtung nach Anspruch 6 zur Durchführung des Verfahrens umfasst üblicherweise Sensoren zur Erfassung der Umgebung des Kraftfahrzeugs während der Durchführung eines Fahrmanövers, eine Ausgabeeinheit zur Darstellung des Kraftfahrzeugs und der aktuellen Umgebung des Kraftfahrzeugs zu jedem Zeitpunkt des Fahrmanövers sowie Sensoren, mit denen erfasst wird, ob der Fahrer des Kraftfahrzeugs das Fahrmanöver überwacht.

Wie vorstehend bereits erwähnt, sind die Sensoren zur Erfassung der Umgebung des Kraftfahrzeugs vorzugsweise Ultraschallsensoren, Infrarotsensoren, Lidar-Sensoren, Radar-Sensoren oder optische Sensoren, beispielsweise Videokameras.

Die Ausgabeeinheit zur Darstellung des Kraftfahrzeugs und der aktuellen Umgebung des Kraftfahrzeugs zu jedem Zeitpunkt des Fahrmanövers ist erfindungsgemäß ein Bildschirm eines mobilen Endgerätes, um dem Fahrer das Überwachen des Fahrmanövers von außerhalb des Fahrzeugs zu ermöglichen. Die Sensoren, mit denen erfasst wird, ob der Fahrer des Kraftfahrzeugs das Fahrmanöver überwacht sind erfindungsgemäß optische Sensoren, beispielsweise eine Kamera auf der Bildschirmseite des mobilen Endgerätes zur Überwachung des Fahrmanövers.

### Kurze Beschreibung der Zeichnungen

Ausführungsbeispiele der Erfindung sind in den Figuren dargestellt und werden in der nachfolgenden Beschreibung näher erläutert.

Es zeigen:
- Figur 1: ein Einparkmanöver eines Kraftfahrzeugs in eine Querparklücke,
- Figur 2: Ausgabe der in Figur 1 dargestellten Situation auf einem Bildschirm eines mobilen Endgerätes.

### Ausführungsbeispiele der Erfindung

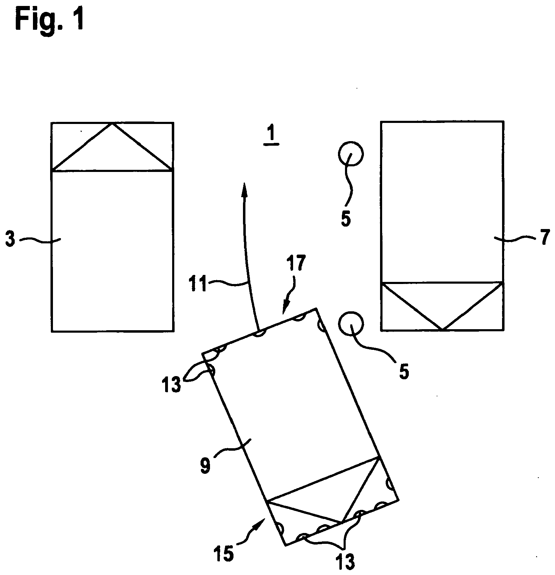

In Figur 1 ist ein Einparkmanöver eines Kraftfahrzeugs in eine Querparklücke dargestellt.

Eine Querparklücke 1 wird zum Beispiel von einem ersten Fahrzeug 3 auf einer Seite begrenzt. Auf der anderen Seite ist in der in Figur 1 dargestellten Ausführungsform die Querparklücke 1 zum Beispiel von Pfeilern 5, beispielsweise Stützpfeilern in einem Parkhaus, begrenzt. Neben den Pfeilern steht hier ein weiteres Fahrzeug 7. In vielen Fällen ist jedoch die Querparklücke 1 nicht von Pfeilern 5 sondern auf beiden Seiten von einem Fahrzeug 3, 7 begrenzt.

Insbesondere wenn die Querparklücke 1 eng ist, ist es vorteilhaft, wenn der Fahrer eines Kraftfahrzeuges 9, das in die Querparklücke 1 einparken möchte, unterstützt wird. Die Unterstützung kann dabei zum Beispiel automatisch oder vollautomatisch erfolgen. Bei einer vollautomatischen Unterstützung des Fahrers wird das Kraftfahrzeug 9 selbsttätig ohne Zutun des Fahrers in die Querparklücke 1 eingeparkt. In diesem Fall fällt dem Fahrer des Kraftfahrzeugs 9 lediglich eine überwachende Funktion zu. Der notwendige Fahrzug, mit dem das Kraftfahrzeug 9 in die Querparklücke 1 einparken kann, ist in der hier dargestellten Ausführungsform mit einem Pfeil 11 dargestellt. Insbesondere beim Einparken in enge Querparklücken kann es bevorzugt sein, wenn der Fahrer vor dem Einparken des Kraftfahrzeugs 9 in die Querparklücke 1 das Kraftfahrzeug 9 verlässt. In diesem Fall muss der Fahrer das Einparkmanöver in die Querparklücke 1 von außerhalb des Kraftfahrzeuges 9 überwachen. Die Überwachung kann dabei direkt erfolgen, das heißt indem der Fahrer des Kraftfahrzeugs 9 sowohl das Kraftfahrzeug 9 als auch die Umgebung des Kraftfahrzeugs beobachtet. Um die gesamte Situation überwachen zu können, wird der Einparkvorgang erfindungsgemäß auf einer Ausgabeeinheit dargestellt, mit der der Fahrer das Einparkmanöver des Kraftfahrzeuges 9 überwachen kann.

Um das Einparkmanöver auf einer mobilen Ausgabeeinheit darstellen zu können, ist es zunächst notwendig, dass die Umgebung des Kraftfahrzeugs 9 überwacht wird. Hierzu werden Sensoren 13 am Kraftfahrzeug eingesetzt. Die Sensoren 13 überwachen den Bereich rund um das Fahrzeug, wobei Sensoren im Frontbereich 15 und im Heckbereich 17 des Fahrzeugs angeordnet sind. Zusätzlich weisen Sensoren zur Seite des Fahrzeuges, um auch den Bereich seitlich neben dem Kraftfahrzeug 9 erfassen zu können. Die mit den Sensoren 13 erfasste Umgebung wird zusätzlich auch benötigt, um eine Trajektorie für das Fahrmanöver berechnen zu können, entlang der das Fahrmanöver, hier das Einparkmanöver in die Querparklücke 1, durchgeführt wird. Die Trajektorie wird dabei so ermittelt, dass das Kraftfahrzeug 9 ohne Schäden an umgebenden Objekten zu verursachen und ohne selbst beschädigt zu werden in die Querparklücke 1 einparkt.

Damit das Einparkmanöver des Kraftfahrzeugs 9 ohne Schäden an umgebenden Objekten und am Kraftfahrzeug 9 selbst zu verursachen in die Querparklücke 1 eingeparkt werden kann, ist es notwendig, auch während des gesamten Fahrmanövers weiterhin die Umgebung zu überwachen. Hierzu werden ebenfalls die Sensoren 13 eingesetzt. Durch die Überwachung der Umgebung mit den Sensoren 13 können auch Änderungen in der Umgebung festgestellt werden, zum Beispiel wenn sich ein Objekt in die Umgebung des Fahrzeuges bewegt, beispielsweise ein Fußgänger oder ein anderes Kraftfahrzeug. Sofern sich das Objekt, beispielsweise der Fußgänger oder das Kraftfahrzeug, in den Gefahrenbereich des Kraftfahrzeugs 9 bewegt, das heißt insbesondere in den Fahrschlauch in einen Bereich der vom Fahrzeug überfahren wird, wird das Fahrmanöver unterbrochen, um eine Schädigung des Objekts zu vermeiden. Sollte das Objekt erfasst werden, das Fahrmanöver jedoch nicht unterbrochen werden, muss der Fahrer des Kraftfahrzeugs das Fahrmanöver manuell unterbrechen, um einen Unfall zu vermeiden. Um das Fahrmanöver manuell abbrechen zu können ist es dabei notwendig, dass der Fahrer des Kraftfahrzeugs 9 das Fahrmanöver überwacht.

Neben dem in Figur 1 dargestellten Einparkmanöver in eine Querparklücke 1 kann das Fahrmanöver, das automatisiert durchgeführt wird auch jedes beliebige andere Fahrmanöver sein, zum Beispiel ein Einparkmanöver in eine Längsparklücke oder auch ein Rangiermanöver, zum Beispiel beim Befahren enger Straßen oder Wege, oder auch ein automatisiertes Fahrmanöver in einem Parkhaus, bei dem zunächst die Umgebung erfasst wird, um eine Parklücke zu finden und anschließend das Fahrzeug in die Parklücke eingeparkt wird. Hierbei ist es zum Beispiel möglich, dass der Fahrer das Kraftfahrzeug vor Einfahrt in das Parkhaus verlässt und den Einparkvorgang von außerhalb des Fahrzeuges weiterverfolgt. Dies ist insbesondere dann hilfreich, wenn innerhalb des Parkhauses lediglich enge Bereiche zum Manövrieren freigehalten werden und die Parklücken ebenfalls eng bemessen sind, so dass ein Aussteigen aus dem Fahrzeug innerhalb des Parkhauses nicht möglich ist. Üblicherweise wird es sich bei dem Fahrmanöver jedoch um das direkte Einparkmanöver in eine Querparklücke oder eine Längsparklücke handeln.

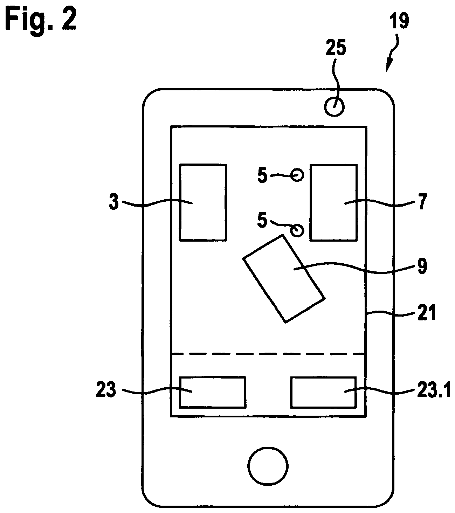

Damit der Fahrer des Kraftfahrzeugs 9 das Fahrmanöver von außerhalb des Fahrzeugs überwachen kann, wird das Kraftfahrzeug 9 samt der Umgebung auf einem mobilen Endgerät 19 dargestellt. Dies ist beispielhaft in Figur 2 gezeigt.

Das mobile Endgerät 19 weist einen Bildschirm 21 auf, auf dem das Kraftfahrzeug 9 und seine Umgebung schematisch dargestellt sind. Um zu unterscheiden, welches das Kraftfahrzeug 9 ist und welche Objekte in der Umgebung ist es zum Beispiel möglich, die Objekte und das Fahrzeug in unterschiedlichen Farben darzustellen. Weiterhin ist es auch möglich, zum Beispiel Objekte, die vom Fahrzeug überfahren werden können, ohne dass hierbei eine Schädigung am Objekt oder am Fahrzeug auftritt, in einer anderen Farbe darzustellen als Objekte, die nicht überfahren werden können.

Das mobile Endgerät 19, auf dessen Bildschirm 21 die Fahrsituation dargestellt wird, ist zum Beispiel ein Smartphone, ein Mobiltelefon oder ein PDA.

Ein Smartphone weist üblicherweise einen berührungssensitiven Bildschirm auf, so dass es möglich ist, auf dem Bildschirm 21 zusätzlich Bedieneinheiten, zum Beispiel in Form von Tastfeldern 23 vorzusehen. Hierbei ist es zum Beispiel möglich, eines der Tastfelder 23 zu nutzen, um das Fahrmanöver abbrechen zu können. Sobald der Fahrer das Tastfeld 23 betätigt, wird das Fahrmanöver gestoppt. Ein zweites Tastfeld 23.1 kann dann zum Beispiel genutzt werden, um ein abgebrochenes oder unterbrochenes Fahrmanöver wieder fortzuführen.

Sobald der Fahrer beim Überwachen des Fahrmanövers realisiert, dass sich ein Objekt im Fahrbereich des Kraftfahrzeugs 9 befindet, das Fahrmanöver jedoch nicht unterbrochen wird, hat der Fahrer die Möglichkeit durch Betätigung des Tastfeldes 23 das Fahrmanöver zu unterbrechen. Sollte das Fahrmanöver von sich aus gestoppt worden sein, weil zum Beispiel sich ein Objekt in den Fahrbereich des Kraftfahrzeugs bewegt hat, ist es möglich, dass der Fahrer durch Betätigung eines anderen Tastfeldes oder desselben Tastfeldes 23, 23.1 das unterbrochene Fahrmanöver wieder in Gang setzt, so dass dieses fortgesetzt und beendet werden kann.

Um sicherzustellen, dass der Fahrer des Kraftfahrzeugs 9 das Fahrmanöver auch überwacht, wird erfindungsgemäß erfasst, ob der Fahrer des Kraftfahrzeugs 9 das Fahrmanöver überwacht. Hierzu wird erfindungsgemäß ein optischer Sensor 25 eingesetzt. Der optische Sensor 25 kann zum Beispiel eine Kamera sein, die sich auf der Vorderseite des mobilen Endgerätes befindet, wobei die Vorderseite des mobilen Endgerätes die Seite ist, auf der sich auch der Bildschirm befindet. Mithilfe des optischen Sensors 25 wird geprüft, ob der Fahrer überhaupt in Richtung des mobilen Endgerätes 19 schaut und weiterhin anhand der Blickrichtung geprüft, ob der Fahrer das Geschehen auf dem Bildschirm 21 des mobilen Endgerätes 19 verfolgt.

Sollte festgestellt werden, dass der Fahrer das Geschehen nicht auf dem Bildschirm verfolgt, ist es erfindungsgemäß möglich, dass vom mobilen Endgerät 19 ein Warnsignal gesendet wird. Hierbei ist es vorteilhaft, wenn das Warnsignal solange gesendet wird, bis der Fahrer seinen Blick wieder dem Bildschirm 21 und damit dem Geschehen des Fahrmanövers zuwendet. Auf diese Weise wird sichergestellt, dass der Fahrer das Fahrmanöver auch tatsächlich überwacht.

Sollte der Fahrer auf das Warnsignal nicht reagieren, wird das Fahrmanöver in diesem Fall abgebrochen. Eine Fortsetzung des Fahrmanövers erfolgt erst dann, wenn sichergestellt ist, dass der Fahrer des Kraftfahrzeugs 9 das Fahrmanöver wieder überwacht. Auf diese Weise kann sichergestellt werden, dass die gesetzlichen Vorgaben für ein automatisiertes Fahrmanöver erfüllt werden und dass das automatisierte Fahrmanöver tatsächlich überwacht wird. Weiterhin ist es auch möglich, dass das Fahrmanöver bereits gleichzeitig mit dem Senden des Warnsignals unterbrochen wird.

Neben der Ausgabe eines Warnsignals und dem nachfolgenden Beenden des Fahrmanövers, wenn der Fahrer auf das Warnsignal nicht reagiert, ist es alternativ auch möglich, dass das Fahrmanöver sofort unterbrochen wird, sobald realisiert wird, dass der Fahrer das Fahrmanöver nicht weiter überwacht.

## Patentansprüche

1. Verfahren zur Unterstützung eines Fahrers eines Kraftfahrzeugs (9) bei einem Fahrmanöver, wobei das Fahrmanöver zumindest semi-automatisch durchgeführt wird, folgende Schritte umfassend:
(a) Erfassung der Umgebung des Kraftfahrzeugs (9) während der Durchführung des Fahrmanövers mit Sensoren (13) am Kraftfahrzeug,
(b) Darstellung des Kraftfahrzeugs (9) und der aktuellen Umgebung des Kraftfahrzeugs (9) zu jedem Zeitpunkt des Fahrmanövers auf einer Ausgabeeinheit (21), wobei die Ausgabeeinheit (21) zur Darstellung des Kraftfahrzeugs (9) und der aktuellen Umgebung des Kraftfahrzeugs (9) zu jedem Zeitpunkt des Fahrmanövers ein Bildschirm (21) eines mobilen Endgerätes (19) ist,
**dadurch gekennzeichnet, dass** während der Durchführung des Fahrmanövers mindestens ein optischer Sensor (25) eingesetzt wird, mit dem erfasst wird, ob der Fahrer des Kraftfahrzeugs (9) das Fahrmanöver auf der Ausgabeeinheit (21) überwacht und Ausgabe einer Warnung und/oder Unterbrechen des Fahrmanövers, wenn der Fahrer das Fahrmanöver nicht weiter überwacht,
wobei mithilfe des optischen Sensors (25) geprüft wird, ob der Fahrer in Richtung des mobilen Endgerätes (19) schaut und weiterhin anhand der Blickrichtung geprüft wird, ob der Fahrer das Geschehen auf dem Bildschirm (21) des mobilen Endgerätes (19) verfolgt.

2. Verfahren gemäß Anspruch 1, **dadurch gekennzeichnet, dass** das mobile Endgerät (19) ein Smartphone, ein Mobiltelefon oder ein PDA ist.

3. Verfahren gemäß Anspruch 1, **dadurch gekennzeichnet, dass** der optische Sensor eine Kamera (25) auf der Bildschirmseite des mobilen Endgerätes (19) ist.

4. Verfahren gemäß einem der Ansprüche 1 bis 3, **dadurch gekennzeichnet, dass** die zur Erfassung der Umgebung des Kraftfahrzeugs (9) eingesetzten Sensoren (13) Ultraschallsensoren, Infrarotsensoren, Lidar-Sensoren, Radar-Sensoren oder optische Sensoren sind.

5. Verfahren gemäß einem der Ansprüche 1 bis 4, **dadurch gekennzeichnet, dass** die Sensoren (13) zur Erfassung der Umgebung des Kraftfahrzeugs (9) so angeordnet sind, dass die Umgebung rund um das Kraftfahrzeug (9) erfasst wird.

6. Vorrichtung zur Durchführung des Verfahrens gemäß einem der Ansprüche 1 bis 5 umfassend Sensoren (13) zur Erfassung der Umgebung des Kraftfahrzeugs (9) während der Durchführung eines Fahrmanövers, eine Ausgabeeinheit (21) zur Darstellung des Kraftfahrzeugs (9) und der aktuellen Umgebung des Kraftfahrzeugs (9) zu jedem Zeitpunkt des Fahrmanövers, wobei die Ausgabeeinheit (21) zur Darstellung des Kraftfahrzeugs (9) und der aktuellen Umgebung des Kraftfahrzeugs (9) zu jedem Zeitpunkt des Fahrmanövers ein Bildschirm (21) eines mobilen Endgerätes (19) ist, sowie mindestens ein optischer Sensor (25), mit dem erfasst wird, ob der Fahrer des Kraftfahrzeugs (9) das Fahrmanöver überwacht.

7. Vorrichtung gemäß Anspruch 6, **dadurch gekennzeichnet, dass** die Sensoren (13) zur Erfassung der Umgebung des Kraftfahrzeugs (9) Ultraschallsensoren, Infrarotsensoren, Lidar-Sensoren, Radar-Sensoren oder optische Sensoren sind.

## Claims

1. Method for assisting a driver of a motor vehicle (9) during a driving manoeuvre, wherein the driving manoeuvre is carried out at least semi-automatically, comprising the following steps:
(a) detecting the surroundings of the motor vehicle (9) during the execution of the driving manoeuvre with sensors (13) on the motor vehicle, and
(b) displaying the motor vehicle (9) and the current surroundings of the motor vehicle (9) on an output unit (21) at all times during the driving manoeuvre, wherein the output unit (21) for displaying the motor vehicle (9) and the current surroundings of the motor vehicle (9) at all times during the driving manoeuvre is a screen (21) of a mobile terminal (19),
**characterized in that** during the execution of the driving manoeuvre at least one optical sensor (25) is used with which it is detected whether the driver of the motor vehicle (9) monitors the driving manoeuvre on the output unit (21), and outputting of a warning and/or interruption of the driving manoeuvre if the driver no longer monitors the driving manoeuvre,
wherein, by means of the optical sensor (25), it is checked whether the driver is looking in the direction of the mobile terminal (19) and it is also checked on the basis of the viewing direction whether the driver is following the events on the screen (21) of the mobile terminal (19).

2. Method according to Claim 1, **characterized in that** the mobile terminal (19) is a smartphone, a mobile phone or a PDA.

3. Method according to Claim 1, **characterized in that** the optical sensor is a camera (25) on the screen side of the mobile terminal (19).

4. Method according to one of Claims 1 to 3, **characterized in that** the sensors (13) which are used to detect the surroundings of the motor vehicle (9) are ultrasonic sensors, infrared sensors, lidar sensors, radar sensors or optical sensors.

5. Method according to one of Claims 1 to 4, **characterized in that** the sensors (13) for detecting the surroundings of the motor vehicle (9) are arranged in such a way that the surroundings all around the motor vehicle (9) are detected.

6. Device for carrying out the method according to one of Claims 1 to 5, comprising sensors (13) for detecting the surroundings of the motor vehicle (9) during the execution of the driving manoeuvre, an output unit (21) for displaying the motor vehicle (9) and the current surroundings of the motor vehicle (9) at all times of the driving manoeuvre, wherein the output unit (21) for displaying the motor vehicle (9) and the current surroundings of the motor vehicle (9) at all times during the driving manoeuvre is a screen (21) of a mobile terminal (19), and at least one optical sensor (25) with which it is detected whether the driver of the motor vehicle (9) monitors the driving manoeuvre.

7. Device according to Claim 6, **characterized in that** the sensors (13) for detecting the surroundings of the motor vehicle (9) are ultrasonic sensors, infrared sensors, lidar sensors, radar sensors or optical sensors.

## Revendications

1. Procédé d'assistance d'un conducteur d'un véhicule automobile (9) dans une manoeuvre de conduite, la manoeuvre de conduite étant exécutée au moins semi-automatiquement et comprenant les étapes suivantes :
(a) détection de l'environnement du véhicule automobile (9) pendant l'exécution de la manoeuvre de conduite à l'aide de capteurs (13) prévus au niveau du véhicule automobile,
(b) représentation du véhicule automobile (9) et de l'environnement actuel du véhicule automobile (9) à chaque instant de la manoeuvre de conduite sur une unité de représentation (21), l'unité de représentation (21) étant un écran (21) d'un appareil terminal (19) mobile servant à représenter le véhicule automobile (9) et l'environnement actuel du véhicule automobile (9) à chaque instant de la manoeuvre de conduite,
**caractérisé en ce que** pendant l'exécution de la manoeuvre de conduite, au moins un capteur optique (25) est utilisé à l'aide duquel on détecte si le conducteur du véhicule automobile (9) surveille la manoeuvre de conduite sur l'unité de représentation (21) et permet l'envoi d'un avertissement et/ou l'interruption de la manoeuvre de conduite lorsque le conducteur ne surveille plus la manoeuvre de conduite,
sachant que l'on vérifie à l'aide du capteur optique (25) si le conducteur regarde en direction de l'appareil terminal (19) mobile et que l'on vérifie en outre avec la direction du regard si le conducteur suit l'événement sur l'écran (21) de l'appareil terminal (19) mobile.

2. Procédé selon la revendication 1, **caractérisé en ce que** l'appareil terminal (19) mobile est un smartphone, un téléphone portable ou un PDA.

3. Procédé selon la revendication 1, **caractérisé en ce que** le capteur optique est une caméra (25) placée sur le côté d'écran de l'appareil terminal (19) mobile.

4. Procédé selon l'une quelconque des revendications 1 à 3, **caractérisé en ce que** les capteurs (13) utilisés pour détecter l'environnement du véhicule automobile (9) sont des capteurs à ultrasons, des capteurs à infrarouge, des capteurs Lidar, des capteurs radar ou des capteurs optiques.

5. Procédé selon l'une quelconque des revendications 1 à 4, **caractérisé en ce que** les capteurs (13) sont disposés de telle sorte, pour détecter l'environnement du véhicule automobile (9), que l'environnement est détecté tout autour du véhicule automobile (9).

6. Dispositif de mise en oeuvre du procédé selon l'une quelconque des revendications 1 à 5, comprenant des capteurs (13) de détection de l'environnement du véhicule automobile (9) pendant l'exécution d'une manoeuvre de conduite, une unité de représentation (21) servant à la représentation du véhicule automobile (9) et de l'environnement actuel du véhicule automobile (9) à chaque instant de la manoeuvre de conduite, l'unité de représentation (21) étant un écran (21) d'un appareil terminal (19) mobile servant à représenter le véhicule automobile (9) et l'environnement actuel du véhicule automobile (9) à chaque instant de la manoeuvre de conduite, ainsi qu'au moins un capteur optique (25) permettant de détecter si le conducteur du véhicule automobile (9) surveille la manoeuvre de conduite.

7. Dispositif selon la revendication 6, **caractérisé en ce que** les capteurs (13) sont des capteurs à ultrasons, des capteurs infrarouge, des capteurs Lidar, des capteurs radar ou des capteurs optiques servant à détecter l'environnement du véhicule automobile (9).
